# EUROPÄISCHE PATENTSCHRIFT

(11) **EP 4 306 869 B1**
(45) Veröffentlichungstag und Bekanntmachung des Hinweises auf die Patenterteilung: **03.09.2025**
(21) Anmeldenummer: 23184910.0
(22) Anmeldetag: 12.07.2023
(51) Int. Cl.: F24H 15/212, F24D 19/10, F24D 3/10, G05D 23/19

(54) **REGELKLEMM- ODER KLEMMLEISTE FÜR EINE FLÄCHENHEIZUNG, ANORDNUNG ZUM BETREIBEN EINER FLÄCHENHEIZUNG UND VERFAHREN ZUR INBETRIEBNAHME EINER FLÄCHENHEIZUNG**
CONTROL CLAMPING STRIP OR CLAMPING STRIP FOR A SURFACE HEATER, ARRANGEMENT FOR OPERATING A SURFACE HEATER AND METHOD FOR STARTING UP A SURFACE HEATER
BAGUETTE DE SERRAGE OU DE SERRAGE À RÉGLAGE POUR UN CHAUFFAGE DE SURFACE, DISPOSITIF DE FONCTIONNEMENT D'UN CHAUFFAGE DE SURFACE ET PROCÉDÉ DE MISE EN SERVICE D'UN CHAUFFAGE DE SURFACE

(30) Priorität: 13.07.2022 DE 102022207165
(43) Veröffentlichungstag der Anmeldung: 17.01.2024
(73) Patentinhaber: Kermi GmbH, 94447 Plattling (DE)
(72) Erfinder: Fellinger, Herbert, 94522 Wallersdorf (DE); Klessinger, Nico, 94209 Regen (DE); Wallner, Marcel, 94032 Passau (DE); Reisinger, Alexander, 94239 Ruhmannsfelden (DE)
(74) Vertreter: Patentanwälte Bressel und Partner mbB

(56) Entgegenhaltungen:
- EP-A1- 3 067 628
- EP-A1- 3 587 973
- DE-A1- 102011 018 698
- DE-A1- 102013 226 492
- DE-A1- 4 127 493
- DE-A1- 4 409 637
- DE-U1- 202009 003 093

## Beschreibung

Die Erfindung betrifft eine Regelklemm- oder Klemmleiste für eine Flächenheizung, eine Anordnung zum Betreiben einer Flächenheizung und ein Verfahren zur Inbetriebnahme einer Flächenheizung.

Bei Flächenheizungen, insbesondere Fußbodenheizungen, dient das Funktionsheizen und Funktionskühlen dem Nachweis der Erstellung eines mangelfreien Gewerks für den Heizungsbauer und Estrichleger. Das Funktionsheizen hat nach einer spezifischen Liegezeit des Estrichs zu erfolgen (z.B. bei Zementestrich frühestens nach 21 Tagen, bei Calciumsulfatestrich frühestens nach 7 Tagen oder jeweils nach anderen spezifischen Zeiträumen gemäß Herstellerangaben). Beim Funktionsheizen wird bereits ein Teil des Überschusswassers entfernt. Nach dem Funktionsheizen und einem anschließendem Abkühlen werden darüber hinaus Spannungsrisse, die sich möglicherweise im Estrich befinden können, sichtbar. Grundlage für das Funktionsheizen und Funktionskühlen ist die Norm DIN EN 1264-4. Insbesondere sind hierbei zu erreichende Vorlauftemperaturen vorgeschrieben und der erfolgreiche Verlauf des Funktionsheizens muss in Form eines Protokolls nachgewiesen werden. Im Anschluss an das Funktionsheizen kann ein Belegreifheizen erfolgen, um die Belegreife des Estrichs für das Belegen mit einem Bodenbelag herzustellen. Das Belegreifheizen ist ebenfalls in Form eines Protokolls nachzuweisen. Das Funktionsheizen und das Belegreifheizen werden oft in dem Begriff "Aufheizen" zusammengefasst, sind aber begrifflich zu trennen.

Aus der EP 0 530 581 A1 sind ein Verfahren und eine Vorrichtung zur Durchführung eines automatischen Steuersystems zum Ausheizen von Fußbodenheizestrichen bekannt, so dass keine Schäden an Bodenbelägen oder Verwölbungen in den Estrichflächen auftreten. Eine gegen Manipulationen in einem Aluminiumkoffer geschützte und eingebaute Regel- und Messelektronik wird dabei anstelle der Standardregelung an die Heizungsanlage angebracht, wobei über die Differenz aus dem Sollwert der Auf- und Abheizkurve und dem jeweiligen Istwert der Vorlauftemperatur ein elektronischer Regler (Mikroprozessor) über eine Regelung der Umwälzpumpe und des Mischermotors den Vorlauftemperatur-Istwert derart steuert, dass der gesamte Vorgang des Auf- und Abheizens vorschriftsmäßig durchlaufen und mit einem Drucker zeitlich dokumentiert wird.

Es ist insofern möglich, die Restausgleichsfeuchte bei Zement- und Anhydridestrichen vorschriftsmäßig durch ein automatisches Steuersystem zu begrenzen, wobei insbesondere eine optimale Beweissicherheit durch ein erstelltes Protokoll über den gesamten Ablauf gegeben ist.

Aus der DE 10 2011 018 698 A1 sind ein Verfahren und ein System zum automatischen hydraulischen Abgleichen von zumindest zwei Heizkörpern in einer Heizungsanlage bekannt, wobei jedem Heizkörper ein Stellventil und jedem Stellventil ein Stellmotor zugeordnet ist, mit den Schritten, vollständiges Schließen aller Stellventile mittels der jeweiligen Stellmotoren, teilweises erstes Öffnen aller Stellventile mittels der jeweiligen Stellmotoren, Bestimmen einer zeitlichen Temperaturveränderung für jedes zumindest einem Heizkörper zugeordnete Thermostat, Vergleichen der zeitlichen Temperaturveränderung mit einem Grenzwert in einer zentralen Steuereinrichtung und, solange die zeitliche Temperaturveränderung aller Thermostate über dem Grenzwert liegt, schrittweises weiteres Öffnen aller Stellventile in Öffnungsschritten mittels der jeweiligen Stellmotoren und jeweiliges Vergleichen der zeitlichen Temperaturveränderung für einen Öffnungsschritt mit dem Grenzwert bis zumindest eine zeitliche Temperaturveränderung eines Thermostats den Grenzwert unterschreitet.

Aus der EP 3 587 973 A1 ist ein Verfahren zur Aushärtung und/oder Trocknung eines Estrichs bekannt, wobei ein Estrich in ein Gebäude eingebracht und getrocknet wird, wobei während der Aushärtung und/oder Trocknung des Estrichs eine Beheizung des Estrichs durchgeführt wird. Die Daten betreffend die Prozessparameter der Aushärtung und/oder Trocknung des Estrichs werden automatisiert erfasst und aufgezeichnet, insbesondere gespeichert.

Aus der DE 44 09 637 A1 sind ein Verfahren und eine Vorrichtung zum Trocknen von Estrichen unter Verwendung einer Fußbodenheizung mit einem Heizkreis und einem Steuergerät mit einem daran angeschlossenen Außentemperaturfühler und einem Vorlauffühler bekannt. Zum Erreichen einer bestimmten Vorlauftemperatur wird ein Regelsignal erzeugt, welches anstelle des Signals der Außentemperatur dem Steuergerät als Eingangssignal zugeführt wird.

Aus der DE 41 27 493 A1 sind ein Verfahren und eine Vorrichtung zur Durchführung eines automatischen Steuersystems zum Ausheizen von Fußbodenheizestrichen bekannt, sodass keine Schäden an Bodenbelegen oder Verwölbungen in den Estrichflächen auftreten. Eine gegen Manipulationen in einem Aluminiumkoffer geschützte und eingebaute Regel- und Messelektronik wird dabei anstelle der Standardregelung an die Heizungsanlage angebracht, wobei über die Differenz aus dem Sollwert der Auf- und Abheizkurve und dem jeweiligen Istwert der Vorlauftemperatur ein elektronischer Regler (Mikroprozessor) über eine Regelung der Umwälzpumpe und des Mischermotors den Vorlauftemperatur-Istwert derart steuert, daß der gesamte Vorgang des Auf- und Abheizens vorschriftsmäßig durchlaufen und mit einem Drucker zeitlich dokumentiert wird. Es ist insofern möglich, die Restausgleichsfeuchte bei Zement- und Anhydridestrichen vorschriftsmäßig durch ein automatisches Steuersystem zu begrenzen, wobei insbesondere eine optimale Beweissicherheit durch ein erstelltes Protokoll über den gesamten Ablauf gegeben ist.

Die EP 3 067 628 A1 beschreibt einen hydraulischen Verteiler für ein hydraulisches Heizungs- und/oder Kühlsystem, welcher modular aufgebaut ist mit einem Hauptmodul und zumindest einem mit dem Hauptmodul verbindbaren Lastmodul, welches zumindest einen hydraulischen Anschluss für einen Lastkreis und eine Reguliereinrichtung zum Regulieren des Durchflusses durch den an dem hydraulischen Anschluss angeschlossenen Lastkreis aufweist sowie zur Verbindung mit einem weiteren identisch ausgebildeten Lastmodul ausgebildet ist, wobei das zumindest eine Lastmodul eine sich zwischen einem ersten und einem zweiten Ende des Lastmoduls erstreckende Leiterplatte aufweist, welche an ihrem ersten und zweiten Ende zueinander derart korrespondierende elektrische Kupplungen aufweist, dass die elektrische Kupplung am zweiten Ende der Leiterplatte mit einer elektrischen Kupplung am ersten Ende eines weiteren identischen Lastmoduls elektrisch leitend in Eingriff treten kann.

Die DE 20 2009 003 093 U1 beschreibt eine Vorrichtung zum Verteilen eines Heizmediums auf mehrere einzeln absperrbare Heizkreise einer Heizungsanlage, mit einer Vorlaufleitung und einer Rücklaufleitung, von denen mehrere Heizkreise abzweigen, wobei eine Messeinrichtung zur Bestimmung des Volumenstroms in der Vorlaufleitung oder der Rücklaufleitung vorgesehen ist.

Die DE 10 2013 226 492 A1 beschreibt ein System zur Steuerung der Trocknungsphase von mit einer Fußbodenheizung, die einen Heizkreislauf mit Vorlauftemperatur umfasst, versehenen Betonestrich in einem Bauwerk. Hierbei werden in dem Betonestrich in einer vorgegebenen Tiefe Sensoren zur Messung der auftretenden Temperatur sowie der Feuchtigkeit im Betonestrich angebracht, ferner wird in mindestens ein Fenster oder eine Öffnung des Bauwerks ein Lüftungsventilator eingesetzt, wobei die Sensoren im Betonestrich und der Lüftungsventilator an eine zentrale Steuereinheit angeschlossen sind, mittels derer in einem ersten Zeitabschnitt bis zum Erreichen einer vorgegebenen minimalen Feuchtigkeit des Betonestrichs der Lüftungsventilator entsprechend einem vorgegebenen Schaltschema ein- sowie ausgeschaltet wird. In einem folgenden zweiten Zeitabschnitt wird dann der Lüftungsventilator nicht mehr aktiviert und vom zentralen Steuergerät die Vorlauftemperatur im Heizkreis der Fußbodenheizung in Abhängigkeit von der Zeit nach einer vorgegebenen Ausheizkurve gesteuert.

Der Erfindung liegt die Aufgabe zu Grunde, eine Vorrichtung und ein Verfahren anzugeben, mit denen ein Funktionsheizen, insbesondere in Bezug auf einen Nachweis der erfolgreichen Durchführung, vereinfacht werden kann.

Die Aufgabe wird erfindungsgemäß durch eine Regelklemm- oder Klemmleiste mit den Merkmalen des Patentanspruchs 1, eine Anordnung mit den Merkmalen des Patentanspruchs 8 und ein Verfahren mit den Merkmalen des Patentanspruchs 11 gelöst. Vorteilhafte Ausgestaltungen der Erfindung ergeben sich aus den Unteransprüchen.

Insbesondere wird eine Regelklemm- oder Klemmleiste für eine Flächenheizung zur Regelung und/oder Steuerung von elektrisch oder elektronisch ansteuerbaren Stellantrieben und/oder Stellgliedern an mindestens einem Heizkreisverteiler geschaffen, mit einer Steuereinrichtung, wobei die Steuereinrichtung dazu eingerichtet ist, im Rahmen eines Inbetriebnahmeprogramms Temperaturmesswerte mindestens eines Temperatursensors zu empfangen und die empfangenen Temperaturmesswerte im zeitlichen Verlauf aufzuzeichnen und bereitzustellen.

Ferner wird insbesondere eine Anordnung zum Betreiben einer Flächenheizung geschaffen, umfassend eine Regelklemm- oder Klemmleiste nach einer der in dieser Offenbarung beschriebenen Ausführungsformen, mindestens einen mit der Regelklemm- oder Klemmleiste vorverdrahteten Temperatursensor zur Anordnung an einem Vorlauf eines Heizkreisverteilers, und vorverdrahtete elektrisch oder elektronisch ansteuerbare Stellantriebe und/oder Stellglieder zur Anordnung an Ventilen des Heizkreisverteilers.

Weiter wird insbesondere auch ein Verfahren zur Inbetriebnahme einer Flächenheizung geschaffen, wobei eine Regelklemm- oder Klemmleiste nach einer der in dieser Offenbarung beschriebenen Ausführungsformen und/oder eine Anordnung nach einer der in dieser Offenbarung beschriebenen Ausführungsformen verwendet wird, wobei ein Inbetriebnahmeprogramm an einer die Flächenheizung speisenden Heiz- und/oder Kühlvorrichtung gestartet wird, wobei Temperaturmesswerte zumindest einer Vorlauftemperatur an zumindest einem Heizkreisverteiler mittels mindestens eines Temperatursensors erfasst werden und mittels der Steuereinrichtung der Regelklemm- oder Klemmleiste im zeitlichen Verlauf aufgezeichnet werden, und wobei die aufgezeichneten Temperaturmesswerte bereitgestellt werden.

Die Regelklemm- oder Klemmleiste und das Verfahren ermöglichen es, auf einfache Weise das Funktionsheizen zu protokollieren und hierdurch einen Nachweis über die Durchführung des Funktionsheizens zu erbringen. Insbesondere kann hierbei eine beim Funktionsheizen vorgeschriebene Vorlauftemperatur nachgewiesen werden. Hierzu ist in der Regelklemm- oder Klemmleiste eine Steuereinrichtung vorgesehen, die dazu eingerichtet ist, zumindest an einem Vorlauf eines Heizkreisverteilers erfasste Temperaturmesswerte (mindestens) eines Temperatursensors zu empfangen und aufzuzeichnen. Die Steuereinrichtung weist hierzu insbesondere einen Speicher auf, in dem die erfassten und empfangenen Temperaturmesserwerte hinterlegt werden können. Der Speicher ist insbesondere ein nichtflüchtiger Speicher, wie beispielsweise ein Flashspeicher. Beispielsweise kann eine SD-Karte zu diesem Zweck verwendet werden.

Ein Vorteil der Regelklemm- oder Klemmleiste ist, dass keine zusätzlichen Vorrichtungen, wie beispielsweise Messkoffer etc., verwendet werden müssen, welche an dem Heizkreisverteiler installiert und nach Durchführen des Inbetriebnahmeprogramms bzw. nach dem Funktionsheizen wieder entfernt werden müssen. Hingegen wird die Regelklemm- oder Klemmleiste einmalig installiert und verbleibt auch nach dem Durchführen des Inbetriebnahmeprogramms am Ort der Installation, da die Regelklemm- oder Klemmleiste dort auch im normalen Betrieb der Flächenheizung weiterbetrieben wird. Es ist daher in vorteilhafter Weise möglich, bereits nach dem Installieren der Regelklemm- oder Klemmleiste die Inbetriebnahme, insbesondere das Funktionsheizen, zu starten. Die Regelklemm- oder Klemmleiste wird insbesondere als Teil der Anordnung bereitgestellt. Zur Installation der Anordnung am endgültigen Betriebsort ist lediglich eine Spannungsversorgung für die Regelklemm- oder Klemmleiste bereitzustellen, die ansteuerbaren Stellantriebe und/oder Stellglieder sind an dem mindestens einen Heizkreisverteiler anzuordnen bzw. auf die Ventile aufzustecken und der mindestens eine Temperatursensor ist an einem Vorlauf des Heizkreisverteilers anzuordnen. Da die Stellantriebe und/oder Stellglieder und der mindestens eine Temperatursensor in der Anordnung bereits vorverdrahtet mit der Regelklemm- oder Klemmleiste sind, ist eine Installation der Anordnung am Betriebsort besonders einfach und aufwandsarm durchzuführen. Insbesondere kann ein Inbetriebnahmeprogramm einer Heiz- oder Kühlvorrichtung bereits ohne kontaktierte Raumtemperatursensoren oder Raumthermostate oder sonstige Regel- oder Steuereinrichtungen und Sensoren gestartet werden. Dies erlaubt eine einfache, automatisierte und frühzeitige Inbetriebnahme, insbesondere ein frühzeitiges Funktionsheizen, der Flächenheizung. Da auf das Inbetriebnahmeprogramm der Heiz- und/oder Kühlvorrichtung zurückgegriffen wird, ist eine externe Steuerung und/oder Regelung der Heiz- und/oder Kühlvorrichtung und eine hierfür notwendige signaltechnische Verbindung nicht notwendig.

Eine Flächenheizung ist insbesondere ein bauteilintegriertes, wasserdurchströmtes Flächenheiz- und/oder Kühlsystem für Boden, Wand und/oder Decke. Ein besonderes Beispiel für eine Flächenheizung ist eine Fußbodenheizung. Bei dieser sind die einzelnen Heizkreise insbesondere in Estrich eingebettet.

Im Rahmen des Funktionsheizens soll insbesondere nicht nur das Bauteil (z.B. der beheizte Estrich) darauf geprüft werden, ob es der thermischen Belastung standhält. Es ist beim Funktionsheizen insbesondere genauso wichtig, die primäre Funktion des Heizens zu prüfen. In erster Linie muss das Bauteil insbesondere die gewünschte Wärmemenge liefern.

Eine Klemmleiste ist insbesondere eine Vorrichtung, in der eine Verdrahtung und/oder Zuordnung von Raumthermostaten und/oder Temperatursensoren in den zu beheizenden/zu kühlenden Räumen mit/zu jeweiligen Heizkreisen und/oder ansteuerbaren Stellantrieben und/oder Stellgliedern an einem Heizkreisverteiler erfolgt. Elektrische Verbindungen zu den Raumthermostaten und/oder Temperatursensoren und den Stellantrieben und/oder Stellgliedern werden beispielsweise über Klemmen, insbesondere Schraubklemmen hergestellt. Es sind jedoch auch andere Verbindungen möglich, wie beispielsweise Steckkontakte oder Federzugklemmen. Eine Regelklemmleiste ist insbesondere eine Klemmleiste, in der zusätzlich Regler zum Regeln einer Temperatur in den jeweiligen Räumen ausgehend von einer eingestellten Solltemperatur und einer erfassten Isttemperatur vorhanden sind.

Es ist insbesondere vorgesehen, dass das Aufzeichnen der Temperaturmesswerte durch eine Bedienhandlung, beispielsweise an einem hierfür vorgesehenen Taster oder Schalter, gestartet werden kann. Ferner kann vorgesehen sein, dass das Aufzeichnen durch eine weitere Bedienhandlung gestoppt werden kann.

Teile der Regelklemm- oder Klemmleiste, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Steuereinrichtung umfasst insbesondere eine Recheneinrichtung, beispielsweise einen Mikrocontroller oder einen Mikroprozessor, und einen Speicher. Es kann vorgesehen sein, dass die Regelklemm- oder Klemmleiste eine Bedieneinheit und/oder eine Anzeige aufweist.

In einer Ausführungsform ist vorgesehen, dass die Steuereinrichtung ferner dazu eingerichtet ist, im Rahmen des Inbetriebnahmeprogramms die ansteuerbaren Stellantriebe und/oder Stellglieder gemäß einem vorgegebenen Inbetriebnahmeplan anzusteuern. Hierdurch können die einzelnen Heizkreise einzeln oder in Kombination miteinander betrieben und überprüft werden. Der Inbetriebnahmeplan ist beispielsweise in dem Speicher der Steuereinrichtung hinterlegt und/oder kann durch einen Nutzer, insbesondere einen Heizungsinstallateur, vorgegeben werden. Der Inbetriebnahmeplan umfasst insbesondere Informationen darüber, zu welchen Zeitpunkten nach Start des Aufzeichnens Heizkreise an dem Heizkreisverteiler durch Ansteuern der Stellantriebe und/oder Stellglieder geöffnet und geschlossen werden sollen. Es kann vorgesehen sein, dass die jeweilige Information bzw. eine jeweils aktive Kombination von geöffneten und geschlossenen Heizkreisen zusammen mit den aufgezeichneten Temperaturmesswerten aufgezeichnet wird, sodass eine eindeutige Zuordnung der aufgezeichneten Temperaturmesswerte zu einer jeweils aktiven Kombination von geöffneten Heizkreisen erfolgen kann.

In einer weiterbildenden Ausführungsform ist vorgesehen, dass der Inbetriebnahmeplan derart ausgestaltet ist, dass nach Abschluss des Inbetriebnahmeprogramms alle Kombinationen von geöffneten und geschlossenen Heizkreisen an dem mindestens einen Heizkreisverteiler zumindest einmal realisiert worden sind. Hierdurch kann eine Vorlauftemperatur beim Betrieb in sämtlichen Permutationen bzw. Kombinationen aus geöffneten und geschlossenen Heizkreisen an dem mindestens einen Heizkreisverteiler überprüft werden. Insbesondere kann im Rahmen der Inbetriebnahme bzw. des Funktionsheizens sichergestellt werden, das eine Durchströmung aller Heizkreise stattgefunden hat. Sind beispielsweise drei Heizkreise vorgesehen, so können nacheinander die folgenden Kombinationen betrieben bzw. durchströmt werden, wobei die jeweils nicht aufgeführten Heizkreise geschlossen sind:
- Heizkreis 1 + Heizkreis 2 + Heizkreis 3
- Heizkreis 1
- Heizkreis 1 + Heizkreis 2
- Heizkreis 1 + Heizkreis 3
- Heizkreis 2
- Heizkreis 2 + Heizkreis 3
- Heizkreis 3

In einer Ausführungsform ist vorgesehen, dass die Regelklemm- oder Klemmleiste eine Drahtlosschnittstelle aufweist, wobei die Drahtlosschnittstelle und die Steuereinrichtung dazu eingerichtet sind, dass das Aufzeichnen über die Drahtlosschnittstelle gestartet werden kann und/oder zumindest die aufgezeichneten Temperaturmesswerte nach Durchlaufen des Inbetriebnahmeprogramms über die Drahtlosschnittstelle bereitgestellt werden können. Hierdurch kann eine besonders einfache Bedienung der Regelklemm- oder Klemmleiste und ein besonders einfaches Bereitstellen der aufgezeichneten Temperaturmesswerte erfolgen. Die Drahtlosschnittstelle kann beispielsweise eine Bluetooth-, NFC- und/oder WLAN-Schnittstelle umfassen. Ein Heizungsinstallateur oder ein anderer Nutzer kann sich dann beispielsweise mittels eines Mobilgeräts, beispielsweise eines Tabletcomputers oder eines Smartphones mit jeweils hierfür vorgesehener Software (App), mit der Regelklemm- oder Klemmleiste verbinden und insbesondere das Aufzeichnen Starten (und Beenden) und die aufgezeichneten Temperaturmesswerte auslesen und/oder abrufen.

In einer Ausführungsform ist vorgesehen, dass die Regelklemm- oder Klemmleiste eine drahtgebundene Schnittstelle aufweist, wobei die drahtgebundene Schnittstelle und die Steuereinrichtung dazu eingerichtet sind, dass das Aufzeichnen über die drahtgebundene Schnittstelle gestartet werden kann und/oder zumindest die aufgezeichneten Temperaturmesswerte nach Durchlaufen des Inbetriebnahmeprogramms über die drahtgebundene Schnittstelle bereitzustellen. Die drahtgebundene Schnittstelle kann beispielsweise eine Modbus RTU- und/oder Modbus TCP-Schnittstelle umfassen. Grundsätzlich können aber auch andere Schnittstellenstandards und/oder Busschnittstellen eingesetzt werden.

In einer Ausführungsform ist vorgesehen, dass die Steuereinrichtung ferner dazu eingerichtet ist, die empfangenen und/oder aufgezeichneten Temperaturmesswerte des mindestens einen Temperatursensors auszuwerten und hierzu die empfangenen und/oder aufgezeichneten Temperaturmesswerte mit zumindest einem vorgegebenen Schwellwert zu vergleichen und ein Vergleichsergebnis bereitzustellen. Hierdurch kann bereits eine Überprüfung in der Regelklemm- oder Klemmleiste erfolgen. Beispielsweise kann überprüft werden, ob eine vorgeschriebene Vorlauftemperatur erreicht wurde oder nicht. Hierdurch können einem Heizungsinstallateur bereits während und/oder nach Durchlaufen des Inbetriebnahmeprogramms der Heiz- und/oder Kühlvorrichtung Informationen bereitgestellt werden, die eine Aussage darüber erlauben, ob das Funktionsheizen erfolgreich war oder nicht. Sind beispielsweise zu viele Heizkreise an einer hierfür zu klein dimensionierten oder falsch parametrierten Heiz- und/oder Kühlvorrichtung angeschlossen, so unterschreitet die erfasste Vorlauftemperatur irgendwann aufgrund einer nicht ausreichenden Heizleistung die vorgeschriebene Vorlauftemperatur. Dies wird dann von der Steuereinrichtung erkannt und das Vergleichsergebnis wird bereitgestellt.

In einer Ausführungsform ist vorgesehen, dass die Steuereinrichtung ferner dazu eingerichtet ist, ausgehend von den empfangenen und/oder aufgezeichneten Temperaturmesswerten des mindestens einen Temperatursensors und einer jeweils zugehörig vorliegenden Kombination von geöffneten und geschlossenen Heizkreisen zumindest heizkreisweise einen Trocknungszustand eines Estrichs zu schätzen und ein jeweiliges Schätzergebnis bereitzustellen. Hierdurch kann direkt eine Information zu einem Trocknungszustand des Estrichs bereitgestellt werden. Insbesondere können hierbei auch an einem Rücklauf mittels mindestens eines weiteren Temperatursensors erfasste und aufgezeichnete Temperaturmesswerte berücksichtigt werden. Eine Differenz zwischen einer Vorlauftemperatur und einer Rücklauftemperatur kann dazu genutzt werden, um eine in den aktiven Heizkreisen abgegebene Wärmemenge zu schätzen und/oder um festzustellen, ob der Trocknungsprozess noch andauert oder bereits abgeschlossen ist. Ist der Estrich noch nicht getrocknet, ist eine Temperaturdifferenz insbesondere größer als bei einem fertig getrockneten Estrich. Insbesondere kann ein Auswerten auch eine Berücksichtigung eines zeitlichen Verlaufs der Temperaturdifferenz nach Öffnen eines Heizkreises umfassen. Beim Auswerten kann auch vorgesehen sein, Temperaturdifferenzen zwischen der Vorlauftemperatur und der Rücklauftemperatur von einzelnen Heizkreisen miteinander zu vergleichen. So zeigen Heizkreise mit unterschiedlichen Trocknungsgraden aufgrund von einer sich unterscheidenden Verdunstungswärme unterschiedliche Temperaturdifferenzen zwischen dem Vorlauf und dem Rücklauf, wohingegen Heizkreise mit fertig getrocknetem Estrich ähnliche Werte zeigen sollten. Eine Grundlage für diese Auswertung können insbesondere empirisch und/oder durch Simulation gewonnene Daten zum Trocknungszustand, einer Länge der betrachteten Heizkreise und den hiermit einhergehenden Vorlauf- und Rücklauftemperaturen bilden, aus denen insbesondere vereinfachte Modelle abgeleitet, in der Steuereinrichtung hinterlegt und zum Schätzen des jeweiligen Trocknungszustands verwendet werden können. Die abgeleiteten Modelle können beispielsweise in Form von Gleichungen, Kennlinien und/oder Kennfeldern in der Steuereinrichtung hinterlegt werden.

Es kann zusätzlich vorgesehen sein, auch eine mittels mindestens eines Raumtemperatursensors erfasste Raumtemperatur beim Auswerten zu berücksichtigen.

In einer Ausführungsform der Anordnung ist vorgesehen, dass die Anordnung mindestens einen mit der Regelklemm- oder Klemmleiste vorverdrahteten weiteren Temperatursensor zur Anordnung an einem Rücklauf des Heizkreisverteilers aufweist.

In einer Ausführungsform des Verfahrens ist entsprechend vorgesehen, dass zusätzlich auch Temperaturmesswerte an einem Rücklauf des Heizkreisverteilers mittels mindestens eines weiteren Temperatursensors erfasst und mittels der Steuereinrichtung der Regelklemm- oder Klemmleiste aufgezeichnet und bereitgestellt werden.

In einer weiteren Ausführungsform der Anordnung ist vorgesehen, dass die ansteuerbaren Stellantriebe und/oder Stellglieder jeweils mindestens eine Betriebszustandsanzeige aufweisen.

In einer weiteren Ausführungsform des Verfahrens ist entsprechend vorgesehen, dass zusätzlich eine Sichtprüfung der ansteuerbaren Stellantriebe und/oder Stellglieder des mindestens einen Heizkreisverteilers anhand der jeweiligen mindestens einen Betriebszustandsanzeige durchgeführt wird. Hierbei kann insbesondere ein jeweiliger Betriebszustand durch die Sichtprüfung erfasst und überprüft werden. Die Betriebszustandsanzeige kann beispielsweise als Hubanzeige an den ansteuerbaren Stellantrieben und/oder Stellgliedern ausgebildet sein, insbesondere als farblich markierte Hubanzeige. Die Betriebszustandsanzeige kann jedoch auch als Leuchtdiode ausgebildet sein, die beispielsweise durch einen Zustand oder eine Farbe den Betriebszustand anzeigt. Insbesondere lässt sich im Rahmen der Sichtprüfung überprüfen, ob eine Kombination aus geöffneten und geschlossenen Stellantrieben und/oder Stellgliedern (bzw. zugehörigen Ventilen) gemäß dem Inbetriebnahmeplan vorliegt oder nicht.

Weitere Merkmale zur Ausgestaltung des Verfahrens ergeben sich aus der Beschreibung von Ausgestaltungen der Regelklemm- oder Klemmleiste. Die Vorteile des Verfahrens sind hierbei jeweils die gleichen wie bei den Ausgestaltungen der Regelklemm- oder Klemmleiste.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen der Regelklemm- oder Klemmleiste und der Anordnung;
- Fig. 2: ein schematisches Ablaufdiagramm von Ausführungsformen des Verfahrens zur Inbetriebnahme einer Flächenheizung.

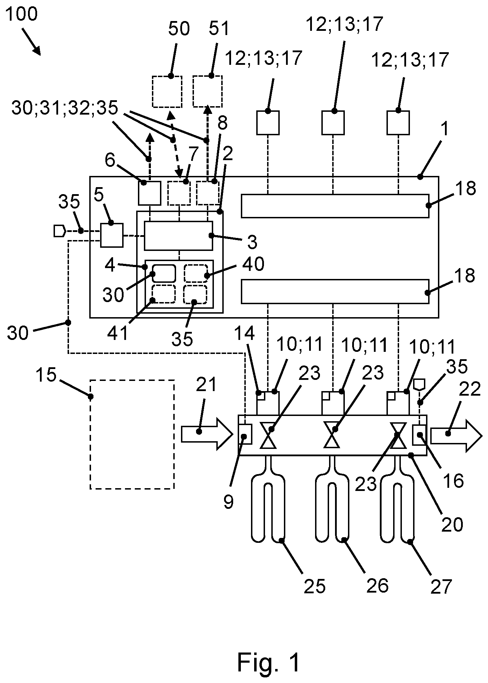

In der Fig. 1 ist eine schematische Darstellung einer Ausführungsform der Regelklemm- oder Klemmleiste 1 als Teil einer Anordnung 100 gezeigt. Die Anordnung 100 umfasst einen mit der Regelklemm- oder Klemmleiste 1 vorverdrahteten Temperatursensor 9, der an einem Vorlauf 21 eines Heizkreisverteilers 20 angeordnet ist, und mit der Regelklemm- oder Klemmleiste 1 vorverdrahtete elektrisch oder elektronisch ansteuerbare Stellantriebe 10 und/oder Stellglieder 11, welche an Ventilen 23 des Heizkreisverteilers 20 angeordnet sind.

Der Heizkreisverteiler 20 wird von einer Heiz- und/oder Kühlvorrichtung 15, beispielsweise einer Ölheizung, Gasheizung, Wärmepumpe oder dergleichen, über den Vorlauf 21 gespeist. Ein Rücklauf 22 des Heizkreisverteilers 20 wird an die Heiz- und/oder Kühlvorrichtung 15 zurückgeführt.

Der Heizkreisverteiler 20 speist beispielhaft drei Heizkreise 25, 26, 27 einer Flächenheizung, insbesondere einer Fußbodenheizung. Die Durchströmung der Heizkreise 25, 26, 27 kann von jeweils einem der Ventile 23 beeinflusst werden. Insbesondere können die Heizkreise 25, 26, 27 mittels der Ventile 23 über die ansteuerbaren Stellantriebe 10 und/oder Stellglieder 11 gesteuert geöffnet und geschlossen werden. Hierdurch ist insbesondere eine Regelung der Heizleistung und somit einer Temperatur in den Räumen möglich, in denen die Heizkreise 25, 26, 27 jeweils angeordnet sind. Die Anzahlen der Heizkreisverteiler 20 und der Heizkreise 25, 26, 27 sind beispielhaft gewählt und können je nach Anwendungsszenario auch anders sein.

Die Regelklemm- oder Klemmleiste 1 dient zur Regelung und/oder Steuerung der elektrisch oder elektronisch ansteuerbaren Stellantriebe 10 und/oder Stellglieder 11 an dem Heizkreisverteiler 20. Mit der Regelklemm- oder Klemmleiste 1 sind insbesondere Raumtemperatursensoren 12 und/oder Raumthermostate 13 und/oder Bedieneinheiten 17 verbunden. Zum elektrischen Verbinden der ansteuerbaren Stellantriebe 10 und/oder Stellglieder 11 und der Raumtemperatursensoren 12 und/oder Raumthermostate 13 und/oder der Bedieneinheiten 17 weist die Regelklemm- oder Klemmleiste 1 insbesondere Verbindungsmittel 18 auf, beispielsweise hierfür vorgesehene Klemmen, insbesondere Schraubklemmen.

Die Regelklemm- oder Klemmleiste 1 weist eine Steuereinrichtung 2 auf. Die Steuereinrichtung 2 umfasst eine Recheneinrichtung 3 und einen Speicher 4. Die Steuereinrichtung 2 ist dazu eingerichtet, im Rahmen eines Inbetriebnahmeprogramms (der Heiz- und/oder Kühlvorrichtung 15) Temperaturmesswerte 30 des Temperatursensors 9 zu empfangen und die empfangenen Temperaturmesswerte 30 im zeitlichen Verlauf aufzuzeichnen und bereitzustellen. Das Empfangen der Temperaturmesswerte 30 erfolgt beispielsweise mittels einer Schnittstelle 5 der Regelklemm- oder Klemmleiste 1. Das Aufzeichnen erfolgt, indem die erfassten Temperaturmesswerte 30 in dem Speicher 4 hinterlegt werden. Hierbei werden insbesondere zu den jeweiligen Temperaturmesswerten 30 auch Zeitstempel hinterlegt. Insbesondere nach Abschluss des Inbetriebnahmeprogramms werden die im Speicher 4 hinterlegten Temperaturmesswerte 30 aus diesem abgerufen und über eine Schnittstelle 6 der Regel- oder Klemmleiste 1 bereitgestellt.

Es kann vorgesehen sein, dass die Steuereinrichtung 2 ferner dazu eingerichtet ist, im Rahmen des Inbetriebnahmeprogramms die ansteuerbaren Stellantriebe 10 und/oder Stellglieder 11 gemäß einem vorgegebenen Inbetriebnahmeplan 40 anzusteuern. Der Inbetriebnahmeplan 40 ist in dem Speicher 4 hinterlegt und umfasst Zeitpunkte, zu denen die Heizkreise 25, 26, 27 jeweils gesteuert geöffnet oder geschlossen werden. Der Inbetriebnahmeplan 40 wird beispielsweise von einem Heizungsinstallateur gemäß der Auslegung der Flächenheizung (insbesondere gemäß einer Anzahl der Heizkreise 25, 26, 27 an dem Heizkreisverteiler 20) in dem Speicher 4 hinterlegt.

Weiterbildend kann vorgesehen sein, dass der Inbetriebnahmeplan 40 derart ausgestaltet ist, dass nach Abschluss des Inbetriebnahmeprogramms alle Kombinationen von geöffneten und geschlossenen Heizkreisen 25, 26, 27 an dem Heizkreisverteiler 20 zumindest einmal realisiert worden sind. Eine beispielhafte Abfolge von Kombinationen für drei Heizkreise 25, 26, 27 wurde bereits in der allgemeinen Beschreibung beschrieben.

Es kann vorgesehen sein, dass die Regelklemm- oder Klemmleiste 1 eine Drahtlosschnittstelle 7 aufweist, wobei die Drahtlosschnittstelle 7 und die Steuereinrichtung 2 dazu eingerichtet sind, dass das Aufzeichnen über die Drahtlosschnittstelle 7 gestartet werden kann und/oder zumindest die aufgezeichneten Temperaturmesswerte 30 nach Durchlaufen des Inbetriebnahmeprogramms über die Drahtlosschnittstelle 7 bereitgestellt werden können. Es kann beispielsweise vorgesehen sein, dass sich ein Mobilgerät 50, beispielsweise ein Tabletcomputer oder ein Smartphone, über die Drahtlosschnittstelle 7 mit der Steuereinrichtung 2 verbinden kann und die aufgezeichneten Temperaturmesswerte 30 aus dem Speicher 4 abruft, um diese beispielsweise auszuwerten und ein Inbetriebnahmeprotokoll zu erstellen.

Es kann alternativ oder zusätzlich vorgesehen sein, dass die Regelklemm- oder Klemmleiste 1 eine drahtgebundene Schnittstelle 8 aufweist, wobei die drahtgebundene Schnittstelle 8 und die Steuereinrichtung 2 dazu eingerichtet sind, dass das Aufzeichnen über die drahtgebundene Schnittstelle 8 gestartet werden kann und/oder zumindest die aufgezeichneten Temperaturmesswerte 30 nach Durchlaufen des Inbetriebnahmeprogramms über die drahtgebundene Schnittstelle 8 bereitzustellen. Die drahtgebundene Schnittstelle 8 kann beispielsweise eine Modbus RTU- und/oder Modbus TCP-Schnittstelle umfassen. Es kann beispielsweise vorgesehen sein, dass sich ein Mangement-System 51, beispielsweise ein Smart Home-System oder eine übergeordnete Gebäudeleittechnik, über die drahtgebundene Schnittstelle 8 mit der Steuereinrichtung 2 verbinden kann und die aufgezeichneten Temperaturmesswerte 30 aus dem Speicher 4 abruft, um diese beispielsweise auszuwerten und ein Inbetriebnahmeprotokoll zu erstellen. Es kann insbesondere auch vorgesehen sein, dass die Schnittstelle 6 die drahtgebundene Schnittstelle 8 ist oder diese umfasst.

Es kann vorgesehen sein, dass die Steuereinrichtung 2 ferner dazu eingerichtet ist, die empfangenen und/oder aufgezeichneten Temperaturmesswerte 30 des Temperatursensors 9 auszuwerten und hierzu die empfangenen und/oder aufgezeichneten Temperaturmesswerte 30 mit zumindest einem vorgegebenen Schwellwert 41 (insbesondere für eine vorgegebene Vorlauftemperatur) zu vergleichen und ein Vergleichsergebnis 31 bereitzustellen.

Es kann vorgesehen sein, dass die Steuereinrichtung 2 ferner dazu eingerichtet ist, ausgehend von den empfangenen und/oder aufgezeichneten Temperaturmesswerten 30 des Temperatursensors 9 und einer jeweils zugehörig vorliegenden Kombination von geöffneten und geschlossenen Heizkreisen 25, 26, 27 zumindest heizkreisweise einen Trocknungszustand eines Estrichs zu schätzen und ein jeweiliges Schätzergebnis 32 bereitzustellen. Der Trocknungszustand umfasst insbesondere zumindest die möglichen Werte bzw. Ausprägungen "nicht trocken" und "trocken".

Es kann ferner vorgesehen sein, dass ein mit der Regelklemm- oder Klemmleiste 1 vorverdrahteter weiterer Temperatursensor 16 zur Anordnung an dem Rücklauf 22 des Heizkreisverteilers 20 vorgesehen ist. Die Steuereinrichtung 2 ist dann ferner dazu eingerichtet, auch erfasste Temperaturmesswerte 35 des weiteren Temperatursensors 16 zu empfangen, aufzuzeichnen und bereitzustellen. Dies ermöglicht es insbesondere, den Trocknungszustand des die einzelnen Heizkreise 25, 26, 27 umschließenden Estrichs verbessert zu schätzen.

Es kann ferner vorgesehen sein, dass die ansteuerbaren Stellantriebe 10 und/oder Stellglieder 11 jeweils mindestens eine Betriebszustandsanzeige 14 (der Übersichtlichkeit halber ist nur eine der Betriebszustandsanzeigen mit einem Bezugszeichen versehen) aufweisen. Beispielsweise können dies Hubanzeigen sein, welche beispielsweise durch farbliche Hervorhebungen einen Hub der Stellantriebe 10 und/oder Stellglieder 11 markieren. Alternativ oder zusätzlich können auch Leuchtmittel, beispielsweise Leuchtdioden, vorgesehen sein, welche einen Betriebszustand (z.B. geöffnet, geschlossen und gestört etc.) der Stellantriebe 10 und/oder Stellglieder 11 anzeigen. Mittels der Betriebszustandsanzeigen 14 können ein Betriebszustand und das korrekte Durchlaufen des Inbetriebnahmeplans 40 mittels einer Sichtprüfung überprüft werden.

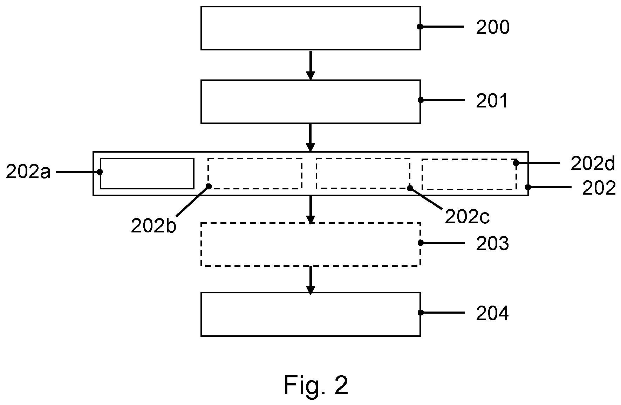

Nachfolgend wird beispielhaft das Verfahren zur Inbetriebnahme einer Flächenheizung anhand der in der Fig. 1 gezeigten Ausführungsform der Regelklemm- oder Klemmleiste 1 näher beschrieben. Ein schematisches Ablaufdiagramm ist in der Fig. 2 gezeigt.

In einem Verfahrensschritt 200 wird das Aufzeichnen der Temperaturmesswerte 30 gestartet. Dies kann beispielsweise über eine hierfür vorgesehene Bedienhandlung an der Regelklemm- oder Klemmleiste 1 erfolgen, beispielsweise durch Betätigung einer hierfür vorgesehenen Taste (nicht gezeigt). Alternativ oder zusätzlich kann vorgesehen sein, das Aufzeichnen der Temperaturmesswerte 30 über die Drahtlosschnittstelle 7 zu starten.

In einem Verfahrensschritt 201 wird zeitgleich oder im Anschluss an den Verfahrensschritt 200 ein Inbetriebnahmeprogramm an der die Flächenheizung speisenden Heiz- und/oder Kühlvorrichtung 15 gestartet, beispielsweise durch Ausführen einer hierfür vorgesehenen Bedienhandlung an einer Benutzerschnittstelle. Ein solches Inbetriebnahmeprogramm umfasst insbesondere ein Funktionsheizen. Grundsätzlich können aber auch weitere Maßnahmen vorgesehen sein, wie beispielsweise ein sich an das Funktionsheizen anschließendes Belegreifheizen. Ein Inbetriebnahmeprogramm umfasst beispielsweise eine dreitägige Phase, in der eine Vorlauftemperatur von 25°C erreicht werden muss und eine sich daran anschließende viertägige Phase, in der die Vorlauftemperatur auf eine maximal vorgesehene Vorlauftemperatur gebracht und gehalten wird. Es können grundsätzlich aber auch andere Inbetriebnahmeprogramme (z.B. 2 Wochen, 3 Wochen etc.), insbesondere auch mit kürzer oder länger andauernden Phasen, vorgesehen sein. Nach dem Starten läuft das Inbetriebnahmeprogramm insbesondere eigenständig in der Heiz- und/oder Kühlvorrichtung 15 ab, das heißt, es ist insbesondere keine Steuerung und/oder Regelung der Vorlauftemperatur von außen notwendig. Das Aufzeichnen wird insbesondere automatisch nach einer vorgesehenen Dauer des Inbetriebnahmeprogramms beendet (z.B. nach 7 Tagen). Grundsätzlich kann aber auch ein manuelles Beenden des Aufzeichnens vorgesehen sein.

Im Rahmen eines Verfahrensschritts 202 werden in einem Verfahrensschritt 202a Temperaturmesswerte 30 zumindest der Vorlauftemperatur an dem Heizkreisverteiler 20 mittels des Temperatursensors 9 erfasst und mittels der Steuereinrichtung 2 der Regelklemm- oder Klemmleiste 1 im zeitlichen Verlauf aufgezeichnet. Hierzu werden die Temperaturmesswerte 30 mit einem Zeitstempel versehen und in dem Speicher 4 der Steuereinrichtung 2 hinterlegt.

Nach Durchlaufen des Inbetriebnahmeprogramms werden in einem Verfahrensschritt 204 die aufgezeichneten Temperaturmesswerte 30 bereitgestellt. Dies erfolgt insbesondere über die Schnittstelle 6 und/oder über die Drahtlosschnittstelle 7. Es kann beispielsweise vorgesehen sein, dass die Temperaturmesswerte 30 zusammen mit den Zeitstempeln mittels eines Mobilgerätes 50 abgefragt werden.

Es kann im Rahmen des Verfahrensschritts 202 in einem Verfahrensschritt 202b vorgesehen sein, dass zusätzlich auch Temperaturmesswerte 35 an einem Rücklauf 22 des Heizkreisverteilers 20 mittels eines weiteren Temperatursensors 16 erfasst und mittels der Steuereinrichtung 2 der Regelklemm- oder Klemmleiste 1 aufgezeichnet werden (und im Verfahrensschritt 204 bereitgestellt werden).

Es kann im Rahmen des Verfahrensschritts 202 in einem Verfahrensschritt 202c vorgesehen sein, dass zusätzlich eine Sichtprüfung der ansteuerbaren Stellantriebe 10 und/oder Stellglieder 11 des Heizkreisverteilers 20 anhand der jeweiligen Betriebszustandsanzeige 14 durchgeführt wird.

Es kann im Rahmen des Verfahrensschritts 202 in einem Verfahrensschritt 202d vorgesehen sein, dass im Rahmen des Inbetriebnahmeprogramms die ansteuerbaren Stellantriebe 10 und/oder Stellglieder 11 gemäß einem vorgegebenen Inbetriebnahmeplan 40 angesteuert werden. Es kann insbesondere vorgesehen sein, dass der Inbetriebnahmeplan 40 derart ausgestaltet ist, dass nach Abschluss des Inbetriebnahmeprogramms alle Kombinationen von geöffneten und geschlossenen Heizkreisen 25, 26, 27 an dem mindestens einen Heizkreisverteiler 20 zumindest einmal realisiert worden sind.

Es kann in einem Verfahrensschritt 203 vorgesehen sein, dass die aufgezeichneten Temperaturmesswerte 30, 35 mittels der Steuereinrichtung 2 ausgewertet werden. Beispielsweise können zumindest die Temperaturmesswerte 30 für die Vorlauftemperatur mit einem vorgegebenen Schwellwert verglichen werden und ein Vergleichsergebnis 31 im Rahmen des Verfahrensschritts 204 bereitgestellt werden. Unter Berücksichtigung der Temperaturmesswerte 35 kann ferner ein Trocknungszustand eines die Heizkreise 25, 26, 27 jeweils umschließenden Estrichs geschätzt und als Schätzergebnis 32 bereitgestellt werden.

### Bezugszeichenliste

- 1: Regelklemm- oder Klemmleiste
- 2: Steuereinrichtung
- 3: Recheneinrichtung
- 4: Speicher
- 5: Schnittstelle
- 6: Schnittstelle
- 7: Drahtlosschnittstelle
- 8: drahtgebundene Schnittstelle
- 9: Temperatursensor (Vorlauf)
- 10: Stellantrieb
- 11: Stellglied
- 12: Raumtemperatursensor
- 13: Raumthermostat
- 14: Betriebszustandsanzeige
- 15: Heiz- und/oder Kühlvorrichtung
- 16: weiterer Temperatursensor (Rücklauf)
- 17: Raumbedieneinheit
- 18: Verbindungsmittel
- 20: Heizkreisverteiler
- 21: Vorlauf
- 22: Rücklauf
- 23: Ventil
- 25: Heizkreis
- 26: Heizkreis
- 27: Heizkreis
- 30: Temperaturmesswerte (Temperatursensor)
- 31: Vergleichsergebnis
- 32: Schätzergebnis
- 35: Temperaturmesswerte (weiterer Temperatursensor)
- 40: Inbetriebnahmeplan
- 41: Schwellwert
- 50: Mobilgerät
- 51: Mangement-System
- 100: Anordnung
- 200-204: Verfahrensschritte des Verfahrens

## Patentansprüche

1. Regelklemm- oder Klemmleiste (1) für eine Flächenheizung zur Regelung und/oder Steuerung von elektrisch oder elektronisch ansteuerbaren Stellantrieben (10) und/oder Stellgliedern (11) an mindestens einem Heizkreisverteiler (20),
mit einer Steuereinrichtung (2), wobei die Steuereinrichtung (2) dazu eingerichtet ist, im Rahmen eines Inbetriebnahmeprogramms Temperaturmesswerte (30,35) mindestens eines Temperatursensors (9,16) zu empfangen und die empfangenen Temperaturmesswerte (30,35) im zeitlichen Verlauf aufzuzeichnen und bereitzustellen.

2. Regelklemm- oder Klemmleiste (1) nach Anspruch 1, **dadurch gekennzeichnet, dass** die Steuereinrichtung (2) ferner dazu eingerichtet ist, im Rahmen des Inbetriebnahmeprogramms die ansteuerbaren Stellantriebe (10) und/oder Stellglieder (11) gemäß einem vorgegebenen Inbetriebnahmeplan (40) anzusteuern.

3. Regelklemm- oder Klemmleiste (1) nach Anspruch 2, **dadurch gekennzeichnet, dass** der Inbetriebnahmeplan (40) derart ausgestaltet ist, dass nach Abschluss des Inbetriebnahmeprogramms alle Kombinationen von geöffneten und geschlossenen Heizkreisen (25,26,27) an dem mindestens einen Heizkreisverteiler (20) zumindest einmal realisiert worden sind.

4. Regelklemm- oder Klemmleiste (1) nach einem der vorangegangenen Ansprüche, **gekennzeichnet durch** eine Drahtlosschnittstelle (7), wobei die Drahtlosschnittstelle (7) und die Steuereinrichtung (2) dazu eingerichtet sind, dass das Aufzeichnen über die Drahtlosschnittstelle (7) gestartet werden kann und/oder zumindest die aufgezeichneten Temperaturmesswerte (30,35) nach Durchlaufen des Inbetriebnahmeprogramms über die Drahtlosschnittstelle (7) bereitgestellt werden können.

5. Regelklemm- oder Klemmleiste (1) nach einem der vorangegangenen Ansprüche, **gekennzeichnet durch** eine drahtgebundene Schnittstelle (8), wobei die drahtgebundene Schnittstelle (8) und die Steuereinrichtung (2) dazu eingerichtet sind, dass das Aufzeichnen über die drahtgebundene Schnittstelle (8) gestartet werden kann und/oder zumindest die aufgezeichneten Temperaturmesswerte (30,35) nach Durchlaufen des Inbetriebnahmeprogramms über die drahtgebundene Schnittstelle (8) bereitgestellt werden können.

6. Regelklemm- oder Klemmleiste (1) nach einem der vorangegangenen Ansprüche, **dadurch gekennzeichnet, dass** die Steuereinrichtung (2) ferner dazu eingerichtet ist, die empfangenen und/oder aufgezeichneten Temperaturmesswerte (30,35) des mindestens einen Temperatursensors (9,16) auszuwerten und hierzu die empfangenen und/oder aufgezeichneten Temperaturmesswerte (30,35) mit zumindest einem vorgegebenen Schwellwert (41) zu vergleichen und ein Vergleichsergebnis (31) bereitzustellen.

7. Regelklemm- oder Klemmleiste (1) nach einem der vorangegangenen Ansprüche, **dadurch gekennzeichnet, dass** die Steuereinrichtung (2) ferner dazu eingerichtet ist, ausgehend von den empfangenen und/oder aufgezeichneten Temperaturmesswerten (30,35) des mindestens einen Temperatursensors (9,16) und einer jeweils zugehörig vorliegenden Kombination von geöffneten und geschlossenen Heizkreisen (25,26,27) zumindest heizkreisweise einen Trocknungszustand eines Estrichs zu schätzen und ein jeweiliges Schätzergebnis (32) bereitzustellen.

8. Anordnung (100) zum Betreiben einer Flächenheizung, umfassend:
eine Regelklemm- oder Klemmleiste (1) nach einem der vorangegangenen Ansprüche,
mindestens einen mit der Regelklemm- oder Klemmleiste (1) vorverdrahteten Temperatursensor (9) zur Anordnung an einem Vorlauf (21) eines Heizkreisverteilers (20), und
vorverdrahtete elektrisch oder elektronisch ansteuerbare Stellantriebe (10) und/oder Stellglieder (11) zur Anordnung an Ventilen (23) des Heizkreisverteilers (20).

9. Anordnung (100) nach Anspruch 8, **gekennzeichnet durch** mindestens einen mit der Regelklemm- oder Klemmleiste (1) vorverdrahteten weiteren Temperatursensor (16) zur Anordnung an einem Rücklauf (22) des Heizkreisverteilers (20).

10. Anordnung (100) nach Anspruch 8 oder 9, **dadurch gekennzeichnet, dass** die ansteuerbaren Stellantriebe (10) und/oder Stellglieder (11) jeweils mindestens eine Betriebszustandsanzeige (14) aufweisen.

11. Verfahren zur Inbetriebnahme einer Flächenheizung,
wobei eine Regelklemm- oder Klemmleiste (1) nach einem der Ansprüche 1 bis 7 und/oder eine Anordnung (100) nach einem der Ansprüche 8 bis 10 verwendet wird,
wobei ein Inbetriebnahmeprogramm an einer die Flächenheizung speisenden Heiz- und/oder Kühlvorrichtung (15) gestartet wird,
wobei Temperaturmesswerte (30,35) zumindest einer Vorlauftemperatur an zumindest einem Heizkreisverteiler (20) mittels mindestens eines Temperatursensors (9,16) erfasst werden und mittels der Steuereinrichtung (2) der Regelklemm- oder Klemmleiste (1) im zeitlichen Verlauf aufgezeichnet werden, und wobei die aufgezeichneten Temperaturmesswerte (30,35) bereitgestellt werden.

12. Verfahren nach Anspruch 11, **dadurch gekennzeichnet, dass** zusätzlich auch Temperaturmesswerte (30,35) an einem Rücklauf (22) des Heizkreisverteilers (20) mittels mindestens eines weiteren Temperatursensors (16) erfasst und mittels der Steuereinrichtung (2) der Regelklemm- oder Klemmleiste (1) aufgezeichnet und bereitgestellt werden.

13. Verfahren nach Anspruch 11 oder 12, **dadurch gekennzeichnet, dass** zusätzlich eine Sichtprüfung der ansteuerbaren Stellantriebe (10) und/oder Stellglieder (11) des mindestens einen Heizkreisverteilers (20) anhand der jeweiligen mindestens einen Betriebszustandsanzeige (14) durchgeführt wird.

## Claims

1. A control clamping or clamping strip (1) for a surface heater for closed-loop and/or open-loop control of electrically or electronically controllable actuating drives (10) and/or actuators (11) on at least one heating circuit distributor (20), with a control device (2), wherein the control device (2) is configured, within the scope of a start-up program, to receive temperature measured values (30, 35) of at least one temperature sensor (9, 16) and to record and provide the received temperature measured values (30, 35) over time.

2. The control clamping strip or clamping strip (1) according to claim 1, **characterised in that** the control device (2) is further configured, within the scope of the start-up program, to control the controllable actuating drives (10) and/or actuators (11) according to a predefined startup plan (40).

3. The control clamping strip or clamping strip (1) according to claim 2, **characterised in that** the startup plan (40) is configured in such a way that once the startup program is complete, all combinations of open and closed heating circuits (25, 26, 27) at the at least one heating circuit distributor (20) have been realised at least once.

4. The control clamping strip or clamping strip (1) according to any one of the preceding claims, **characterised by** a wireless interface (7), wherein the wireless interface (7) and the control device (2) are configured such that the recording can be started via the wireless interface (7) and/or at least the recorded temperature measured values (30, 35) can be provided via the wireless interface (7) once the startup program has been run through.

5. The control clamping strip or clamping strip (1) according to any one of the preceding claims, **characterised by** a wired interface (8), wherein the wired interface (8) and the control device (2) are configured such that the recording can be started via the wired interface (8) and/or at least the recorded temperature measured values (30, 35) can be provided via the wired interface (8) once the startup program has been run through.

6. The control clamping strip or clamping strip (1) according to any one of the preceding claims, **characterised in that** the control device (2) is further configured to evaluate the received and/or recorded temperature measured values (30, 35) of the at least one temperature sensor (9, 16) and, to this end, to compare the received and/or recorded temperature measured values (30, 35) with at least one predefined threshold value (41) and to provide a comparison result (31).

7. The control clamping strip or clamping strip (1) according to any one of the preceding claims, **characterised in that** the control device (2) is further configured, starting from the received and/or recorded temperature measured values (30, 35) of the at least one temperature sensor (9, 16) and associated combination of open and closed heating circuits (25, 26, 27), to estimate a drying state of a screed at least per heating circuit and to provide a respective estimation result (32).

8. An arrangement (100) for operating a surface heater, comprising:
a control clamping strip or clamping strip (1) according to any one of the preceding claims,
at least one temperature sensor (9) pre-wired with the control clamping strip or clamping strip (1) for arrangement at a feed (21) of a heating circuit distributor (20), and
pre-wired electrically or electronically controllable actuating drives (10) and/or actuators (11) for arrangement at valves (23) of the heating circuit distributor (20).

9. The arrangement (100) according to claim 8, **characterised by** at least one further temperature sensor (16), pre-wired with the control clamping strip or clamping strip (1), for arrangement at a return (22) of the heating circuit distributor (20).

10. The arrangement (100) according to claim 8 or 9, **characterised in that** the controllable actuating drives (10) and/or actuators (11) each have at least one operating state display (14).

11. A method for starting a surface heater,
wherein a control clamping strip or clamping strip (1) according to any one of claims 1 to 7 and/or an arrangement (100) according to any one of claims 8 to 10 is used,
wherein a startup program is started at a heating and/or cooling device (15) feeding the surface heater,
wherein temperature measured values (30, 35) of at least one feed temperature are detected at at least one heating circuit distributor (20) by means of at least one temperature sensor (9, 16) and are recorded by means of the control device (2) of the control clamping strip or clamping strip (1) over time, and
wherein the recorded temperature measured values (30, 35) are provided.

12. The method according to claim 11, **characterised in that** additionally also temperature measured values (30, 35) are detected at a return (22) of the heating circuit distributor (20) by means of at least one further temperature sensor (16) and are recorded and provided by means of the control device (2) of the control clamping strip or clamping strip (1).

13. The method according to claim 11 or 12, **characterised in that** additionally a visual inspection of the controllable actuating drives (10) and/or actuators (11) of the at least one heating circuit distributor (20) is performed on the basis of the respective at least one operating state display (14).

## Revendications

1. Bande de serrage de commande ou bande de serrage (1) pour un réchauffeur de surface pour commande en boucle fermée/ou en boucle ouverte de dispositifs d'entraînement actionneurs (10) et/ou d'actionneurs (11) pouvant être commandés de manière électrique ou électronique sur au moins un distributeur de circuit de chauffage (20), avec un dispositif de commande (2), dans laquelle le dispositif de commande (2) est configuré, dans la portée d'un programme de démarrage, pour recevoir des valeurs mesurées de température (30, 35) d'au moins un capteur de température (9, 16) et pour enregistrer et fournir les valeurs mesurées de température (30, 35) reçues au cours du temps.

2. Bande de serrage de commande ou bande de serrage (1) selon la revendication 1, **caractérisée en ce que** le dispositif de commande (2) est en outre configuré, dans la portée du programme de démarrage, pour commander les dispositifs d'entraînement actionneurs (10) et/ou les actionneurs (11) pouvant être commandés conformément à un plan de démarrage prédéfini (40).

3. Bande de serrage de commande ou bande de serrage (1) selon la revendication 2, **caractérisée en ce que** le plan de démarrage (40) est configuré d'une manière telle qu'une fois le programme de démarrage terminé, toutes les combinaisons de circuits de chauffage ouverts et
fermés (25, 26, 27) au niveau de l'au moins un distributeur de circuit de chauffage (20) ont été réalisées au moins une fois.

4. Bande de serrage de commande ou bande de serrage (1) selon l'une quelconque des revendications précédentes, **caractérisée par** une interface sans fil (7), dans laquelle l'interface sans fil (7) et le dispositif de commande (2) sont configurés de telle sorte que l'enregistrement peut être démarré par l'intermédiaire de l'interface sans fil (7) et/ou au moins les valeurs mesurées de température (30, 35) enregistrées peuvent être fournies par l'intermédiaire de l'interface sans fil (7) une fois que le programme de démarrage a été exécuté jusqu'au bout.

5. Bande de serrage de commande ou bande de serrage (1) selon l'une quelconque des revendications précédentes, **caractérisée par** une interface filaire (8), dans laquelle l'interface filaire (8) et le dispositif de commande (2) sont configurés de telle sorte que l'enregistrement peut être démarré par l'intermédiaire de l'interface filaire (8) et/ou au moins les valeurs mesurées de température (30, 35) enregistrées peuvent être fournies par l'intermédiaire de l'interface filaire (8) une fois que le programme de démarrage a été exécuté jusqu'au bout.

6. Bande de serrage de commande ou bande de serrage (1) selon l'une quelconque des revendications précédentes, **caractérisée en ce que** le dispositif de commande (2) est en outre configuré pour évaluer les valeurs mesurées de température (30, 35) reçues et/ou enregistrées de l'au moins un capteur de température(9, 16) et, à cette fin, pour comparer les valeurs mesurées de température (30, 35) reçues et/ou enregistrées à au moins une valeur de seuil prédéfinie (41) et pour fournir un résultat de comparaison (31).

7. Bande de serrage de commande ou bande de serrage (1) selon l'une quelconque des revendications précédentes, **caractérisée en ce que** le dispositif de commande (2) est en outre configuré, en partant des valeurs mesurées de température (30, 35) reçues et/ou enregistrées de l'au moins un capteur de température(9, 16) et de la combinaison associée de circuits de chauffage ouverts et fermés (25, 26, 27), pour estimer un état de séchage d'une chape au moins par circuit de chauffage et pour fournir un résultat d'estimation (32) respectif.

8. Agencement (100) destiné à faire fonctionner un réchauffeur de surface, comprenant :
une bande de serrage de commande ou une bande de serrage (1) selon l'une quelconque des revendications précédentes,
au moins un capteur de température (9) pré-câblé avec la bande de serrage de commande ou la bande de serrage (1) pour agencement au niveau d'une alimentation (21) d'un distributeur de circuit de chauffage (20), et
des dispositifs d'entraînement actionneurs (10) et/ou des actionneurs (11) pouvant être commandés de manière électrique ou électronique pour agencement au niveau de vannes (23) du distributeur de circuit de chauffage (20).

9. Agencement (100) selon la revendication 8, **caractérisé par** au moins un capteur de température (16) supplémentaire, pré-câblé avec la bande de serrage de commande ou la bande de serrage (1), pour agencement au niveau d'un retour (22) du distributeur de circuit de chauffage (20).

10. Agencement (100) selon la revendication 8 ou 9, **caractérisé en ce que** les dispositifs d'entraînement actionneurs (10) et/ou les actionneurs (11) pouvant être commandés ont chacun au moins un affichage d'état de fonctionnement (14).

11. Procédé destiné à démarrer un réchauffeur de surface, dans lequel une bande de serrage de commande ou une bande de serrage (1) selon l'une quelconque des revendications 1 à 7 et/ou un agencement (100) selon l'une quelconque des revendications 8 à 10 est utilisé, dans lequel un programme de démarrage est démarré au niveau d'un dispositif de chauffage et/ou de refroidissement (15) alimentant le réchauffeur de surface,
dans lequel les valeurs mesurées de température (30, 35) d'au moins une température d'alimentation sont détectées au niveau de l'au moins un distributeur de circuit de chauffage (20) au moyen d'au moins un capteur de température (9, 16) et sont enregistrées au moyen du dispositif de commande (2) de la bande de serrage de commande ou de la bande de serrage (1) au cours du temps, et
dans lequel les valeurs mesurées de température (30, 35) enregistrées sont fournies.

12. Procédé selon la revendication 11, **caractérisé en ce que** de plus également des valeurs mesurées de température (30, 35) sont détectées au niveau d'un retour (22) du distributeur de circuit de chauffage (20) au moyen d'au moins un capteur de température supplémentaire (16) et sont enregistrées et fournies au moyen du dispositif de commande (2) de la bande de serrage de commande ou de la bande de serrage (1).

13. Procédé selon la revendication 11 ou 12, **caractérisé en ce que** de plus un examen visuel des dispositifs d'entraînement actionneurs (10) et/ou des actionneurs (11) pouvant être commandés de l'au moins un distributeur de circuit de chauffage (20) est réalisé sur la base de l'au moins un affichage d'état de fonctionnement (14) respectif.
